# EUROPÄISCHE PATENTSCHRIFT

(11) **EP 2 393 878 B1**
(45) Veröffentlichungstag und Bekanntmachung des Hinweises auf die Patenterteilung: **12.12.2012**
(21) Anmeldenummer: 10702110.7
(22) Anmeldetag: 29.01.2010
(51) Int. Cl.: C08L 25/04, C08L 77/00, C08L 21/00

(54) **THERMOPLASTISCHE FORMMASSEN AUF BASIS VON STYROLCOPOLYMEREN UND POLYAMIDEN MIT VERBESSERTER WITTERUNGSBESTÄNDIGKEIT**
THERMOPLASTIC MOLDING COMPOUNDS BASED ON STYRENE COPOLYMERS AND POLYAMIDES HAVING IMPROVED WEATHERING RESISTANCE
MATIÈRES À MOULER THERMOPLASTIQUES À BASE DE COPOLYMÈRES DE STYRÈNE ET DE POLYAMIDES PRÉSENTANT UNE RÉSISTANCE AMÉLIORÉE AUX INTEMPÉRIES

(30) Priorität: 06.02.2009 EP 09152296
(43) Veröffentlichungstag der Anmeldung: 14.12.2011
(73) Patentinhaber: Styrolution GmbH, 60325 Frankfurt am Main (DE)
(72) Erfinder: WEBER, Martin, 67487 Maikammer (DE); BLINZLER, Marko, 68163 Mannheim (DE); SCHWEIGER, Christian, 69259 Wilhelmsfeld (DE); SCHNEIDEREIT, Christoph, 67063 Ludwigshafen (DE)
(74) Vertreter: Jacobi, Markus Alexander
(86) Internationale Anmeldenummer: PCT/EP2010/051097
(87) Internationale Veröffentlichungsnummer: WO 2010/089258

(56) Entgegenhaltungen:
- WO-A-2005/040281

## Beschreibung

Die Erfindung betrifft Styrolcopolymere und Polyamide enthaltende thermoplastische Formmassen, Verfahren zu ihrer Herstellung, ihre Verwendung sowie daraus hergestellte Formkörper, Fasern und Folien.

Polymere Blends aus Styrolcopolymeren und Polyamiden sind an sich bekannt. Binäre Blends aus Polyamiden und Styrolcopolymeren weisen aufgrund der Unverträglichkeit zwischen Polyamid und beispielsweise Styrol-Acrylnitrilpolymer sehr schlechte Zähigkeiten auf. Durch Verwendung funktionalisierter Styrol-Acrylnitril-Copolymere (SAN-Copolymere) kann die Zähigkeit der Blends signifikant gesteigert werden. Außerdem weisen derartige Produkte interessante Eigenschaften wie eine hohe Schlagzähigkeit, gute Fließfähigkeit und Chemikalienresistenz auf. Als Verträglichkeitsvermittler eignen sich vor allem Styrol-Acrylnitril-Maleinsäureanhydrid-Terpolymere, Styrol-N-Phenylmaleinimid-Maleinsäureanhydrid-Terpolymere und Methylmethacrylat-Maleinsäureanhydrid-Copolymere. Es wird davon ausgegangen, dass die Amino- bzw. Carboxylendgruppen der Polyamide mit den funktionellen Gruppen der genannten Co - und Terpolymere reagieren, wobei in situ Copolymere entstehen, welche die Verträglichkeit zwischen der Styrolcopolymerphase und der Polyamidphase herstellen. Solche Polymermischungen mit modifizierter Grenzfläche werden im Allgemeinen als Polymerlegierungen bezeichnet.

Für viele Anwendungen weisen die bisher bekannten Styrolcopolymer-Polyamid-Blends ungenügende UV-Stabilität auf. Eine Verbesserung der Witterungsbeständigkeit kann beispielsweise durch Verwendung von Schlagzäh-Modifiern erreicht werden, die keine olefinischen Doppelbindungen aufweisen. Ihre Verwendung kann neben höheren Stoffkosten auch zu einer signifikanten Verminderung der Kerbschlagzähigkeit bei niedrigen Temperaturen führen. Zudem können Polyamide mit sterisch gehinderten Piperidin-Endgruppen als HALS-Stabilisatoren eingesetzt werden. Die Verwendung der beispielsweise Triacetondiamin (TAD)-haltigen Formmassen führt jedoch unter ungünstigen Verarbeitungsbedingungen zu einem Abfall der Schädigungsarbeit bei niedrigen Temperaturen.

Aus der WO 2005/040281 sind thermoplastische Formmassen bekannt, die Polyamid mit TAD-Endgruppen, Styrol-Acrylnitril-Maleinsäureanhydrid-Terpolymere, Pfropfkautschuke und häufig Phthalsäureanhydrid enthalten. Die beschriebenen Formmassen weisen nicht für alle Anwendungen ein optimales Eigenschaftsprofil auf.

Aufgabe der vorliegenden Erfindung ist die Bereitstellung von thermoplastischen Formmassen auf Basis von Styrolcopolymeren und Polyamiden mit verbesserter Farbstabilität und guter Fließfähigkeit sowie guter Schlagzähigkeit bei Umgebungstemperatur und niedrigen Temperaturen sowie einer verbesserten Schädigungsarbeit bei niedrigen Temperaturen. Sie sollen keine Tiger-Streifentextur nach Spritzguss zeigen und witterungsstabil sein.

Die Aufgabe wird erfindungsgemäß gelöst durch eine thermoplastische Formmasse enthaltend,
a) 3 bis 78 Gew.-% eines oder mehrerer Styrolcopolymere, die keine von Maleinsäureanhydrid abgeleiteten Einheiten aufweisen, als Komponente A,
b) 15 bis 90 Gew.-% eines oder mehrerer Polyamide als Komponente B,
c) 5 bis 50 Gew.-% eines oder mehrerer schlagzäh-modifizierender Pfropf-Kautschuke ohne olefinische Doppelbindungen in der Kautschukphase als Komponente C,
d) 1 bis 25 Gew.-% eines oder mehrerer Styrolcopolymere, die, bezogen auf die gesamte Komponente D, 0,5 bis 5 Gew.-% von Maleinsäureanhydrid abgeleitete Einheiten aufweisen, als Komponente D,
e) 1 bis 30 Gew.-% eines oder mehrerer weiterer Kautschuke auf Basis olefinischer Monomere ohne Kern-Schale-Aufbau und mit mindestens 0,1 Gew.-% funktioneller Monomere als Komponente E,
f) 0 bis 50 Gew.-% eines oder mehrerer faser- oder teilchenförmiger Füllstoffe als Komponente F,
g) 0 bis 40 Gew.-% weiterer Zusatzstoffe als Komponente G,
wobei die Gesamtmenge der Komponenten A bis E und gegebenenfalls F und G 100 Gew.-% ergibt.

Es wurde erfindungsgemäß gefunden, dass eine spezielle Kombination von Styrolcopolymeren und Polyamid mit einem spezifischen Anteil Maleinsäureanhydrid-Einheiten enthaltender Styrolcopolymere und funktionellen Kautschuken neben Pfropfkautschuken zu den erfindungsgemäßen Vorteilen führt.

Der Anteil der Komponente A in den thermoplastischen Formmassen beträgt 3 bis 78 Gew.-%, vorzugsweise 8 bis 52 Gew.-%, insbesondere 10 bis 30 Gew.-%.

Komponente B ist in den thermoplastischen Formmassen in einer Menge von 15 bis 90 Gew.-%, vorzugsweise 25 bis 55 Gew.-%, insbesondere 35 bis 45 Gew.-% enthalten.

Komponente C ist in den thermoplastischen Formmassen in einer Menge von 5 bis 50 Gew.-%, vorzugsweise 15 bis 45 Gew.-%, insbesondere 20 bis 35 Gew.-% enthalten.

Komponente D ist in den thermoplastischen Formmassen in einer Menge von 1 bis 25 Gew.-%, vorzugsweise 2 bis 10 Gew.-%, insbesondere 3 bis 7 Gew.-% enthalten.

Komponente E ist in den thermoplastischen Formmassen in einer Menge von 1 bis 30 Gew.-%, vorzugsweise 1,5 bis 10 Gew.-%, insbesondere 2 bis 5 Gew.-% enthalten.

Komponente F ist in den thermoplastischen Formmassen in einer Menge von 0 bis 50 Gew.-%, vorzugsweise 0 bis 25 Gew.-%, insbesondere 0 bis 8 Gew.-% enthalten. Sofern Komponente F vorliegt, ist sie vorzugsweise in einer Mindestmenge von 0,1 Gew.-% enthalten.

Komponente G ist in den thermoplastischen Formmassen in einer Menge von 0 bis 40 Gew.-%, vorzugsweise 0 bis 30 Gew.-%, insbesondere 0 bis 17 Gew.-% enthalten. Sofern Komponente G vorliegt, beträgt ihre Mindestmenge 0,1 Gew.-%.

Sofern eine oder mehrere der Komponenten F oder G vorliegen, vermindert sich die maximal mögliche Menge der Komponenten A bis E entsprechend um die hinzukommende Mindestmenge der Komponenten F und/oder G, so dass sich in jedem Fall eine Gesamtmenge von 100 Gew.-% ergibt.

### Komponente A

Als Komponente A enthalten die erfindungsgemäßen thermoplastischen Formmassen ein oder mehrere Styrolcopolymere, die keine von Maleinsäureanhydrid abgeleiteten Einheiten aufweisen. Dabei können in den Copolymeren neben Styrol beliebige geeignete Comonomere vorliegen. Bevorzugt handelt es sich um ein Styrol-Acrylnitril-Copolymer oder alpha-Methylstyrol-Acrylnitril-Copolymer.

Als Komponente A der thermoplastischen Matrix M sind grundsätzlich alle dem Fachmann bekannten und in der Literatur beschriebenen Styrol-Acrylnitril-Copolymere, α-Methylstyrol-Acrylnitril-Copolymere oder deren Mischungen einsetzbar, sofern deren Mischungen eine Viskositätszahl VZ (gemessen nach DIN 53727 bei 25 °C als 0,5 gew.-%ige Lösung in Dimethylformamid; diese Messmethode gilt auch für alle im folgenden genannten Viskositätszahlen VZ) gleich oder kleiner als 85 ml/g haben.

Bevorzugte Komponenten A sind aufgebaut aus 50 bis 90 Gew.-%, bevorzugt 60 bis 80 Gew.-%, insbesondere 65 bis 78 Gew.-%, Styrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Weiterhin bevorzugte Komponenten A sind aufgebaut aus 50 bis 90 Gew.-%, bevorzugt 60 bis 80 Gew.%, insbesondere 65 bis 78 Gew.-%, α-Methylstyrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere und dieser α-Methylstyrol-Acrylnitril-Copolymere.

Als oben genannte weitere Monomere sind alle copolymerisierbaren und von Maleinsäureanhydrid verschiedene Monomere einsetzbar, beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymere der Komponente A lassen sich nach an sich bekannten Methoden herstellen. Sie lassen sich z. B. durch radikalische Polymerisation, insbesondere durch Emulsions-, Suspensions-, Lösungs- oder Massepolymerisation herstellen.

Die Styrolcopolymere sind bevorzugt kautschukfrei.

### Komponente B

Als Komponente B enthalten die erfindungsgemäßen thermoplastischen Formmassen eines oder mehrere Polyamide mit bevorzugt, bezogen auf die gesamte Komponente B, 0,05 bis 0,5 Gew.-%, vorzugsweise 0,1 bis 0,2 Gew.-% Triacetondiamin (TAD)-Endgruppen.

Dabei kann es sich um TAD-freie Polyamide, TAD-haltige Polyamide oder auch um Mischungen von Polyamiden mit TAD-Endgruppen mit Polyamiden ohne TAD-Endgruppen handeln. Insgesamt können bevorzugt auf die Komponente B bezogen 0,1 bis 0,2 Gew.-% Triacetondiamin-Endgruppen vorliegen. Bevorzugt liegen 0,14 - 0,18 Gew.-% TAD-Endgruppen vor, insbesondere 0,15 bis 0,17 Gew.-% TAD-Endgruppen.

Als Komponente B wird erfindungsgemäß ein Polyamid eingesetzt, von dessen Endgruppen sich mindestens eine von der Piperidinverbindung TAD ableiten kann. Es können auch Mischungen aus zwei oder mehreren unterschiedlichen Polyamiden als Komponente B eingesetzt werden. Beispielsweise können Polyamide unterschiedlicher Grundstruktur aber gleicher Endgruppe verwendet werden. Es ist aber auch möglich Polyamide mit gleichem Grundgerüst und Endgruppen einzusetzen, die sich von unterschiedlichen Piperidinverbindungen ableiten. Des Weiteren ist es möglich, Mischungen aus Polyamiden zu verwenden, die unterschiedliche Gehalte an Endgruppen aufweisen, die sich von den Piperidinverbindungen ableiten.

Unter Polyamiden werden Homopolymere oder Copolymere von synthetischen langkettigen Polyamiden verstanden, die als wesentlichen Bestandteil wiederkehrend AmidGruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 5,10 (Polypentamethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon.

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Amino- und Amid-Endgruppen der Ausgansmonomere oder Ausgangsoligomere miteinander unter Bildung einer Amid-Gruppe und Ammoniak. Der Ammoniak kann anschließend von der Polymermasse entfernt werden.

Als Ausgangsmonomere oder Ausgangsoligomere zur Herstellung von Polyamiden eignen sich beispielsweise
(1) C₂- bis C₂₀-, vorzugsweise C₃- bis C₁₈- Aminosäuren, wie 6-Aminocapronsäure, 11-Aminoundecansäure, sowie deren Dimere, Trimere, Tetramere, Pentamere oder Hexamere,
(2) C₂- bis C₂₀- Aminosäureamide, wie 6-Aminocapronsäureamid, 11-Aminoundecansäureamid sowie deren Dimere, Trimere, Tetramere, Pentamere oder Hexamere,
(3) Umsetzungsprodukte von
   (3a) C₂- bis C₂₀-, vorzugsweise C₂- bis C₁₂-Alkylendiaminen, wie Tetramethylendiamin oder vorzugsweise Hexamethylendiamin, mit
   (3b) einer C₂- bis C₂₀-, vorzugsweise C₂- bis C₁₄-aliphatischen Dicarbonsäure, wie Sebacinsäure, Decandicarbonsäure oder Adipinsäure,
   sowie deren Dimere, Trimere, Tetramere, Pentamere oder Hexamere,
(4) Umsetzungsprodukte von (3a), mit
   (4b) einer C₈- bis C₂₀-, vorzugsweise C₈- bis C₁₂-aromatischen Dicarbonsäure oder deren Derivate beispielsweise Chloride, wie 2,6-Naphthalindicarbonsäure, vorzugsweise Isopthalsäure oder Terephthalsäure,
   sowie deren Dimere, Trimere, Tetramere, Pentamere oder Hexamere,
(5) Umsetzungsprodukte von (3a), mit
   (5b) einer C₉- bis C₂₀-, vorzugsweise C₉- bis C₁₈-arylaliphatischen Dicarbonsäure oder deren Derivate, beispielsweise Chloride, wie o-, m- oder p-Phenylendiessigsäure,
   sowie deren Dimere, Trimere, Tetramere, Pentamere oder Hexamere,
(6) Umsetzungsprodukte von
   (6a) C₆- bis C₂₀-, vorzugsweise C₆- bis C₁₀-aromatischen Diaminen, wie, m- oder p-Phenylendiamin, mit (3b)
   sowie deren Dimere, Trimere, Tetramere, Pentamere oder Hexamere,
(7) Umsetzungsprodukte von
   (7a), C₇- bis C₂₀-, vorzugsweise C₈- bis C₁₈- arylaliphatischen Diaminen, wie m - oder p-Xylylendiamin, mit (3b)
   sowie deren Dimere, Trimere, Tetramere, Pentamere oder Hexamere,
(8) Monomere oder Oligomere eines C₂- bis C₂₀-, vorzugsweise C₂- bis C₁₈- arylaliphatischen oder vorzugsweise aliphatischen Lactams, wie Enantholactam, Undecanolactam, Dodecanolactam oder Caprolactam,
sowie Homopolymere, Copolymere oder Mischungen solcher Ausgangsmonomere oder Ausgangsoligomere.

Bevorzugt sind dabei solche Ausgangsmonomere oder Ausgangsoligomere, die bei der Polymerisation zu den Polyamiden Nylon 6, Nylon 6,6, Nylon 4,6, Nylon 5,10, Nylon 6,10, Nylon 7, Nylon 11, Nylon 12, insbesondere zu Nylon 6 und Nylon 66, führen.

Die gegebenenfalls vorhandenen Triacetondiamin (TAD)-Endgruppen leiten sich von 4-Amino-2,2, 6, 6-Tetramethylpiperidin ab. Das TAD kann über eine Amino- oder Carboxylgruppe an das Polyamid angebunden sein. Es kann sich so auch beispielsweise um 4-Carboxy-2,2,6,6-Tetramethylpiperdin handeln.

Die Herstellung der Polyamide B ist an sich bekannt oder kann nach an sich bekannten Verfahren erfolgen. So kann die Polymerisation bzw. Polykondensation der Ausgangsmonomere, beispielsweise in Gegenwart der Piperdinverbindungen, unter üblichen Verfahrensbedingungen vorgenommen werden, wobei die Umsetzung kontinuierlich oder diskontinuierlich erfolgen kann. Die Piperidinverbindungen können - sofern vorhanden - aber auch mit einem Kettenregler, wie er üblicherweise für die Herstellung von Polyamiden eingesetzt wird, kombiniert werden. Angaben zu geeigneten Verfahren finden sich z. B. in WO 95/28443, WO 99/41297 oder DE-A 198 12 135. Die TAD-Verbindung wird durch Reaktion mindestens einer der amidbildenden Gruppen R⁷ an das Polyamid gebunden. Die sekundären Aminogruppen der Piperidin-Ringsysteme reagieren dabei wegen sterischer Hinderung nicht.

Es ist auch möglich, Polyamide zu verwenden, die durch Copolykondensation von zwei oder mehr der oben genannten Monomeren oder ihrer Komponenten hergestellt worden sind, z. B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Ein teilaromatisches Polyamid ist Nylon 9T, das sich von Nonandiamin und Terephthalsäure ableitet.

Als Monomere kommen auch cyclische Diamine wie die der allgemeinen Formel V 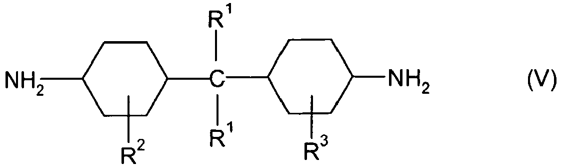 in der
R¹ Wasserstoff oder eine C₁ - C₄-Alkylgruppe,
R² eine C₁ - C₄-Alkylgruppe oder Wasserstoff und
R³ eine C₁ - C₄-Alkylgruppe oder Wasserstoff bedeutet, in Betracht.

Besonders bevorzugte Diamine V sind Bis(4-aminocyclohexyl)methan, Bis(4-amino-3-methylcyclohexyl)methan, Bis(4-aminocyclohexyl)-2,2-propan oder Bis(4-amino-3-methylcyclohexyl)-2,2-propan.

Als weitere Diamine V seien 1,3- oder 1,4-Cyclohexandiamin oder Isophorondiamin genannt. Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, dass der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Die Herstellung der teilaromatischen Copolyamide kann z. B. nach dem in den EP-A-129 195 und EP-A-129 196 beschriebenen Verfahren erfolgen.

Bevorzugte teilaromatische Polyamide sind solche, die einen Gehalt an Triamineinheiten, insbesondere Einheiten des Dihexamethylentriamins von unter 0,555 Gew.-% aufweisen. Besonders bevorzugt werden solche teilaromatischen Polyamide mit Triamingehalten von 0,3 Gew.-% oder weniger.

Bevorzugt werden lineare Polyamide mit einem Schmelzpunkt über 200 °C.

Bevorzugte Polyamide sind Polyhexamethylenadipinsäureamid, Polyhexamethylensebacinsäureamid und Polycaprolactam sowie Polyamid 6/6T und Polyamid 66/6T sowie Polyamide, die cyclische Diamine als Comonomere enthalten. Die Polyamide weisen im Allgemeinen eine relative Viskosität von 2,0 bis 5 auf, bestimmt an einer 1 gew.-%igen Lösung in 96%iger Schwefelsäure bei 23 °C, was einem Molekurlargewicht (Zahlenmittel) von etwa 15.000 bis 45.000 entspricht. Polyamide mit einer relativen Viskosität von 2,4 bis 3,5, insbesondere 2,5 bis 3,4, werden bevorzugt verwendet.

Außerdem seien noch Polyamide erwähnt, die z. B. durch Kondensation von 1,4-Diaminobutan mit Adipinsäure unter erhöhter Temperatur erhältlich sind (Polyamid 4,6). Herstellungsverfahren für Polyamide dieser Struktur sind z. B. in den EP-A 38 094, EP-A 38 582 und EP-A 39 524 beschrieben.

### Komponente C

Als Komponente C enthalten die thermoplastischen Formmassen schlagzähmodifizierende Pfropfkautschuke ohne olefinische Doppelbindungen in der Kautschukphase. Unter Pfropfkautschuken im Sinne der Erfindung werden Kern-Schale-Kautschuke verstanden, die auch mehrschalig aufgebaut sein können. Es können dabei übliche Schlagzähmodifier verwendet werden, die für Polyamide geeignet sind.

Bei den Kern-Schale-Pfropfkautschuken handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 °C, unter einem weichen Bestandteil ein Polymerisat mit einer Glastemperatur von höchstens 0 °C, vorzugsweise kleiner -20°C, besonders bevorzugt kleiner -40°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i. a. von Alkylacrylaten, Alkylmethacrylaten, EPDM oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankemen umgesetzt werden. Die Siloxane können auch vernetzt werden, indem z. B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z. B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i. a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Expoxi- Oxazolin-, Urethan-, Harnstoff-, Lactam- oder Halogenbenzylgruppen ist erfindungsgemäß möglich und erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono - oder Diester der Maleinsäure, tertiär-Butyl(meth-)acrylat, Acrylsäure, Glycidyl(meth)-acrylat und Vinyloxazolin. Der Anteil an Monomeren mit funktionellen Gruppen beträgt, sofern sie vorliegen, i. a. 0,1 bis 25 Gew.-%, vorzugsweise 0,25 bis 15 Gew.-%, bezogen auf das Gesamtgewicht des Kem-Schale-Pfropfkautschuks. Das Gewichtsverhältnis von weichen zu harten Bestandteilen beträgt i. a. 1 : 9 bis 9 : 1, bevorzugt 3 : 7 bis 8 : 2. Bevorzugt liegen keine funktionellen Gruppen vor, d. h. es werden keine funktionalisierten Monomere mitverwendet.

Derartige Kautschuke, die die Zähigkeit von Polyamiden erhöhen, sind an sich bekannt und beispielsweise in der EP-A 208 187 beschrieben.

Erfindungsgemäß handelt es sich um Pfropfkautschuke, die keine ethylenisch ungesättigten Kohlenwasserstoffreste (olefinische Doppelbindungen), enthalten. Besonders bevorzugt handelt es sich um ASA-Kautschuke (Acrylnitril-Styrol-Alkylacrylat-Kautschuke).

Bei der Polymerisation der Hartphase entstehen auch untergeordnete Mengen ungepfropfter Anteile. Diese werden der Hartphase zugerechnet. Es können auch Mischungen verschiedener Kautschuke verwendet werden, wobei sich vorzugsweise die verwendeten Kautschuke in ihren Weichphasenanteilen um mindestens 5 Gew.-% unterscheiden.

### Komponente D

Als Komponente D enthalten die erfindungsgemäßen thermoplastischen Formmassen Styrol-Copolymere, die, bezogen auf die gesamte Komponente D, 0,5 bis 5 Gew.-%, vorzugsweise 1,0 bis 2,5, insbesondere 1,9 bis 2,3 Gew.-% von Maleinsäureanhydrid abgeleitete Einheiten aufweisen. Besonders bevorzugt beträgt dieser Anteil 2,0 bis 2,2 Gew.-%, speziell etwa 2,1 Gew.-%.

Besonders bevorzugt ist Komponente D ein Styrol-Acrylnitril-Maleinsäureanhydrid-Terpolymer oder Styrol-N-Phenylmaleinimid-Maleinsäureanhydrid-Terpolymer.

Im Terpolymer beträgt der Anteil an Acrylnitril, bezogen auf das gesamte Terpolymer, vorzugsweise 10 bis 30 Gew.-%, besonders bevorzugt 15 bis 30 Gew.-%, insbesondere 20 bis 25 Gew.-%. Der verbleibende Rest entfällt auf Styrol.

Die Copolymere haben im allgemeinen Molekulargewichte M_{W} im Bereich von 30.000 bis 500.000 g/mol vorzugsweise von 50.000 bis 250.000 g/mol, insbesondere von 70.000 bis 200.000 g/mol, bestimmt durch GPC unter Verwendung von Tetrahydrofuran (THF) als Eluent und mit Polystyrol-Kalibrierung.

Die Copolymeren können durch freie radikale bildende Polymerisation der entsprechenden Monomere hergestellt werden. Die Herstellung ist beispielsweise in WO 2005/040281, Seite 10, Zeile 31 bis Seite 11, Zeile 8, näher erläutert.

Ferner können auch Styrol-N-Phenylmaleinimid-Maleinsäureanhydrid-Terpolymere eingesetzt werden. Es kann ferner auf die Beschreibungen in EP-A-0 784 080 sowie DE-A-100 24 935 verwiesen werden, wie auch auf DE-A-44 07 485, Beschreibung der dortigen Komponente B auf den Seiten 6 und 7.

### Komponente E

Als Komponente E enthalten die erfindungsgemäßen thermoplastischen Formmassen weitere Kautschuke. Der oder die weiteren Kautschuke basieren auf olefinischen Monomeren ohne Kern-Schale-Aufbau und weisen mindestens 0,1 Gew.-% funktioneller Monomere auf. Der Ausdruck "auf Basis" bedeutet, dass der größte Anteil des Kautschuks sich von olefinischen Monomeren ableitet (mindestens 60 Gew.-%, vorzugsweise mindestens 80 Gew.-%, insbesondere mindestens 90 Gew.-%). Der Kautschuk weist mindestens 0,1 Gew.-% funktionelle Monomere auf. Hierbei handelt es sich um Monomere, die eine funktionelle Gruppe enthalten, die insbesondere zur Ausbildung von Bindungen mit dem Polyamid der Komponente B befähigt sind. Dabei werden vorzugsweise kovalente Bindungen ausgebildet. Bevorzugt sind in den funktionellen Monomeren die darin enthaltenen funktionellen Gruppen, ausgewählt aus Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen.

Bevorzugt ist Komponente E ein Copolymerisat aus
e1) 35 bis 89,95 Gew.-% Ethylen als Komponente E1,
e2) 10 bis 60 Gew.-% 1-Octen, 1-Buten, Propen oder Mischungen davon als Komponente E2 und
e3) 0,05 bis 5 Gew.-% funktioneller Monomere, wobei die Monomere funktionelle Gruppen tragen, ausgewählt aus Carbonsäure-, Carbonsäureanhydrid, Carbonsäureester-, Carbonsäureamid-, Carbonsäureimid-, Amino-, Hydroxyl-, Epoxid-, Urethan- oder Oxazolingruppen oder Mischungen davon als Komponente E3.

Der Anteil der funktionellen Gruppen E3 beträgt dabei 0,1 bis 5, vorzugsweise 0,2 bis 4 und insbesondere 0,3 bis 3,5 Gew.-%, bezogen auf das Gesamtgewicht der Komponente E.

Besonders bevorzugte Komponenten E3 sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₈-Alkylester der Acrylsäure oder Methacrylsäure, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.

Als weitere Beispiele für Monomere E3 seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I - IV zum Monomerengemisch in die Olefinpolymerisate eingebaut.

R₁C(COOR₂)=C(COOR₃)R₄ (I)

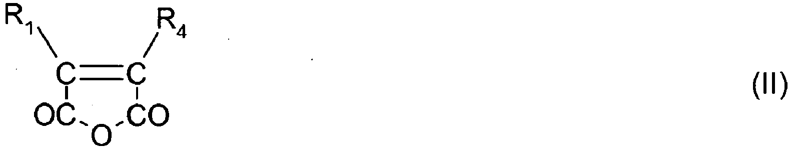

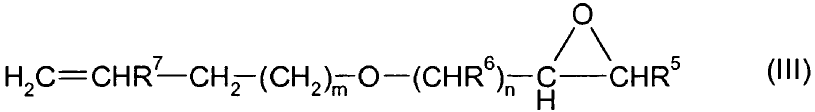

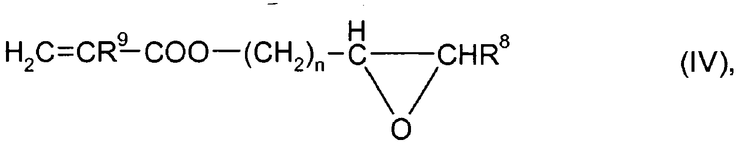

wobei die Reste R₁-R₄, R⁵-R⁹ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R₁-R₄, R⁵-R⁷ist Wasserstoff, für m der Wert 0 oder 1 und für n der Wert 1. Die entsprechenden Verbindungen sind Maleinsäure, Fumarsäure, Maleinsäureanhydrid, bzw. Alkenylglycidylether oder Vinylglycidylether.

Bevorzugte Verbindungen der Formeln I, II, III und IV sind Maleinsäure und Maleinsäureanhydrid als Komponente E3 und Epoxygruppen-enthaltende Ester der Acrylsäure und/oder Methacrylsäure, wobei Glycidylacrylat und Glycidylmethacrylat (als Komponente E3) besonders bevorzugt werden.

Besonders bevorzugt sind Olefinpolymerisate aus

| | |
|---|---|
| 50 bis 89,8 | Gew.-% Ethylen, vorzugsweise 55 bis 85,7, |
| 10 bis 50 | Gew.-% 1-Buten, vorzugsweise 14 bis 44, |
| 0,2 bis 2 | Gew.-% Acrylsäure oder Maleinsäure oder Maleinsäureanhydrid, bevorzugt von 0,3 bis 1 Gew.-%, |

oder

| | |
|---|---|
| 40 bis 69,9 | Gew.-% Ethylen, vorzugsweise 50 bis 64,9, |
| 30 bis 60 | Gew.-% 1-Octen, vorzugsweise 35 bis 49, |
| 0,05 bis 2 | Gew.-% Acrylsäure oder Maleinsäure oder Maleinsäureanhydrid, bevorzugt von 0,1 bis 1 Gew.-%. |

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

In einer besonderen Ausführungsform werden mittels sog. "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Bevorzugt eingesetzte Handelsprodukte E sind Exxelor^{®} VA 1801 oder 1803, Kraton^{®} G 1901 FX oder Fusabond^{®} N NM493 D der Firmen Exxon, Kraton und DuPont sowie Tafmer^{®}MH 7010 der Firma Mitsui sowie Lupolen^{®} KR 1270 der BASF.

Selbstverständlich können auch Mischungen der vorstehend aufgeführten Kautschuktypen eingesetzt werden.

Die funktionalisierten Kautschuke der Komponente E reagieren in der Schmelze mit der Komponente B und werden darin fein dispergiert. Besonders bevorzugt sind EP-Kautschuke mit Acrylsäure oder Maleinsäureanhydrid gepfropft, Ethylen-Acrylsäure-Copolymere, Ethylen-Octen-Copolymere mit Maleinsäureanhydrid gepfropft, SEBS-Kautschuke, welche mit Maleinsäureanhydrid gepfropft sind, sowie Ethylen-Buten-Copolymere, die mit Maleinsäureanhydrid oder Acrylsäure gepfropft sind.

### Komponente F

Als Komponente F können die erfindungsgemäßen thermoplastischen Formmassen einen oder mehrere faser- oder teilchenförmige Füllstoffe enthalten. Bevorzugte faserförmige Füll- oder Verstärkungsstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit Schlichte und einem Haftvermittler ausgerüstet sein. Im Allgemeinen haben die verwendeten Kohlenstoff- und Glasfasern einen Durchmesser im Bereich von 6 - 20 µm. Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 - 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talcum, Feldspat, Glaskugeln und insbesondere Calciumsilicate wie Wollastonit und Kaolin (insbesondere kalzinierter Kaolin).

Besonders bevorzugte Kombinationen von Füllstoffen sind solche aus Glasfasern und Wollastonit.

Als Komponente G können weitere Zusatzstoffe eingesetzt werden. Beispiele hierfür sind Flammschutzmittel, Farbstoffe, Pigmente oder Stabilisatoren, beispielsweise Thermostabilisatoren oder UV-Stabilisatoren, sowie Gleitmittel oder Entformungshilfen.

Die erfindungsgemäßen Formmassen enthalten vorzugsweise weniger als 0,1 Gew.-% Phthalsäureanhydrid. Besonders bevorzugt enthalten die Formmassen kein Phthalsäureanhydrid.

Die Erfindung betrifft auch ein Verfahren zur Herstellung der vorstehend beschriebenen thermoplastischen Formmassen, bei denen man die Komponenten A - E und gegebenenfalls F und G in beliebiger Reihenfolge miteinander vermischt.

Die Reihenfolge, in der die Komponenten gemischt werden, ist beliebig. Beispielsweise ist die Herstellung der Formmassen möglich, indem die Ausgangskomponenten in üblichen Mischvorrichtungen wie Schneckenextrudern, vorzugsweise 2-Schneckenextrudem, Brabender-Mischern oder Banbury-Mischern, sowie Knetern mischt und anschließend extrudiert. Nach der Extrusion wird das Extrudat abgekühlt und zerkleinert. Die Reihenfolge der Mischungskomponenten kann variiert werden, so können zwei oder gegebenenfalls drei Komponenten vorgemischt werden. Es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 - 30 Minuten bei Temperaturen von 240 - 300 °C, bevorzugt 245 - 290 °C erforderlich. Nach der Extrusion wird das Extrudat in der Regel abgekühlt und zerkleinert.

Gemäß einer bevorzugten Ausführungsform der Erfindung wird zunächst die Komponente E mit mindestens einem Teil der Komponente B zu einem Masterbatch vorgemischt, vorzugsweise unter Aufschmelzen, der nachfolgend mit den weiteren Komponenten der thermoplastischen Formmasse vermischt wird. Hierdurch wird eine gleichmäßige Vermischung erheblich vereinfacht und beschleunigt. Komponente E kann somit fein dispergiert an Komponente B angebunden werden.

Die erfindungsgemäßen Formmassen zeichnen sich u. a. durch eine verbesserte Schädigungsarbeit bei - 30 °C aus. Zudem zeichnen sie sich auch durch geringere Neigung zur Bildung von Formbelag aus. Sie zeigen zudem weniger Tiger-Linien (tiger lines).

Die erfindungsgemäßen thermoplastischen Formmassen können zur Herstellung von Formkörpern, Fasern und Folien verwendet werden. Insbesondere werden sie zur Herstellung von Formkörpern eingesetzt. Dabei werden die Formkörper vorzugsweise in KFZ-Bauteilen oder Elektronikgeräten eingesetzt. Besonders bevorzugt sind die KFZ-Bauteile dabei im Betrieb, d. h. beim Betrieb des KFZ, einer Bewitterung ausgesetzt. Besonders vorteilhaft werden die thermoplastischen Formmassen zur Herstellung von Ausbauteilen eingesetzt, die in Cabrios Verwendung finden. Durch die offene Bauweise von Cabrios sind auch Bauteile aus dem Innenraum des KFZ der UV-Bestrahlung und Bewitterung ausgesetzt.

Besondere Vorteile zeigen die erfindungsgemäßen Formmassen bei der Herstellung von Formteilen mit heller Einfärbung, da sie eine sehr geringe Eigenfarbe aufweisen und bei der Spritzgussverarbeitung keine oder nur marginale Texturen ausbilden.

Die Erfindung betrifft auch Formkörper, Fasern und Folien, die aus den erfindungsgemäßen Formmassen aufgebaut sind.

Die Erfindung wird durch die nachstehenden Beispiele näher erläutert.

### Beispiele

### Herstellung und Prüfung der Formmassen

Die Viskositätszahl der Polyamide wird nach DIN 53 727 an 0,5 gew.%-igen Lösungen in 96 Gew.-% Schwefelsäure ermittelt. Die Viskositätszahl der Styrolco- oder -terpolymere wird in 0,5 gew.-%iger DMF-Lösung bei 25 °C bestimmt.

**Die Wärmeformbeständigkeit der Proben wurde mittels der Vicat-**Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Kerbschlagzähigkeit der Produkte wurde an ISO-Stäben nach ISO 179 1eA bestimmt.

Die Fließfähigkeit wurde nach ISO 1133 bei 240 °C und 5 kg Belastung bestimmt.

Die Schädigungsarbeit wurde nach ISO 6603 an Platten (60 x 60 x 3 mm³) bei - 30 °C ermittelt. Dabei wurde die Gesamtarbeit Wₜ verwendet.

Die Platten wurden bei einer Massetemperatur von 250, 270 oder 290°C und einer Werkzeugtemperatur von 60°C gefertigt. Die Qualität der Oberfläche wurde an Platten der Größe 330 mm x 120 mm x 2 mm beurteilt, welche bei einer Massetemperatur von 250°C unter einer Werkzeugtemperatur von 60°C hergestellt wurden. Die Beurteilung der Oberfläche erfolgte nach dem Schulnotensystem (1: keine tiger lines; 6: sehr viele tiger lines).

Die Farbe der Proben wurde nach Lagerung von 1000 Stunden im Xenon-Test visuell ermittelt und in die Klassen 1 (keine Verfärbung) bis 5 (intensive Gelbfärbung) eingeteilt.

### Komponente A

Styrol-Acrylnitril-Copolymer mit 75 Gew.-% Styrol und 25 Gew.-% Acrylnitril und einer Viskositätszahl von 80 ml/g (bestimmt in 0,5 gew.-%iger DMF-Lösung bei 25 °C)

### Komponente B 1

Als Polyamid B 1 wurde ein Polyamid 6, erhalten aus ε-Caprolactam, mit einer Viskositätszahl von 150 ml/g (gemessen 0,5 gew.-%ig in 96 %iger Schwefelsäure) verwendet, z. B. Ultramid® B 3.

### Komponente B 2

Als Polyamid B 2 wurde ein Polyamid 6, erhalten aus ε-Caprolactam, mit einer Viskositätszahl von 130 ml/g (gemessen 0,5 gew.-%ig in 96 %iger Schwefelsäure) und einem Anteil von Triacetondiamin von 0,16 Gew.-% verwendet.

### Komponenten C 1 und C 2

Pfropfkautschuk mit 62 Gew.-% Polybutadien im Kern und 38 Gew.-% einer Pfropfhülle aus 75 Gew.-% Styrol und 25 Gew.-% Acrylnitril. Mittlere Teilchengröße ca. 400 nm.
**C 1**: Ein feinteiliges-Propfpolymerisat, hergestellt aus
   ß1) 16 g Butylacrylat und 0,4 g Tricyclodecenylacrylat, die in 150 g Wasser unter Zusatz von 1 g des Natriumsalzes einer C₁₂-C₁₈-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurde innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt, und die Teilchengrößenverteilung war eng (Quotient Q = 0,29).
   ß2) 150 g des nach ß1) erhaltenen Polybutylacrylat-Latex wurden mit 40 g einer Mischung aus Styrol und Acrylnitril (Gewichtsverhältnis 75 : 25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.
C 2: Ein grobteiliges Pfropfpolymerisat, das folgendermaßen hergestellt wurde:
   ß3) Zu einer Vorlage aus 1,5 g des nach ß1 hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer C₁₂-C₁₈-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 430 nm ermittelt, die Teilchengrößenverteilung war eng (Q = 0,1).
   ß4) 150 g des nach ß3 hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75 : 25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.
**CV:** Pfropfkautschuk mit 62 Gew.-% Polybutadien und 38 Gew.-% einer Pfropfhülle aus 75 Gew.-% Styrol und 25 Gew.-% Acrylnitril, mittlere Teilchengröße ca. 400 nm.

### Komponente D

Als Komponente D wurde ein Styrol-Acrylnitril-Maleinsäureanhydrid-Terpolymer verwendet, welches eine Zusammensetzung von 74,4/23,5/2,1 (Gew.-%) hatte, Viskositätszahl: 66 ml/g.

### Komponente E

Tafmer^{®} MH 7010: Ethylen-1-Buten-Copolymer mit 67,9 % Ethylen, 31,6 Gew.-% Buten und 0,5 Gew.-% Maleinsäure funktionalisiert.

### Komponente E*

Kompound aus 80 Teilen Komponente B1 und 20 Teilen E, hergestellt durch Schmelzekompoundierung auf einer ZSK 30 bei 250°C, 10 kg/h Durchsatz und 250 min⁻¹ Drehzahl.

### Herstellung der erfindungsgemäßen Formmassen

Die Komponenten wurden in einem Zweiwellenextruder bei einer Massetemperatur von 240 bis 260°C gemischt. Die Schmelze wurde durch ein Wasserbad geleitet und granuliert.

Die Ergebnisse der Prüfungen sind in Tabelle 1 aufgeführt.

**Tabelle 1:**

| Formmasse | V1 | V2 | V3 | V4 | 5 | 6 | 7 | V8 | 9 | 10 | 11 |
|---|---|---|---|---|---|---|---|---|---|---|---|
| | | | | | | | | | | | |
| A | 19 | 19 | 19 | 19 | 19 | 19 | 19 | 14 | 14 | 14 | 14 |
| B1 | - | - | - | 41 | 41 | 41 | 41 | 53 | 53 | 41 | - |
| B2 | 41 | 41 | 41 | - | - | - | - | - | - | - | 41 |
| C1 | - | 35 | - | - | - | - | 31 | - | - | - | - |
| C2 | - | - | 35 | 35 | 31 | 33 | - | - | 24 | 24 | 24 |
| CV | 35 | - | - | - | - | - | - | 28 | - | - | - |
| D | 5 | 5 | 5 | 5 | 5 | 5 | 5 | 5 | 5 | 5 | 5 |
| E | - | - | - | - | 4 | 2 | 4 | - | 4 | - | - |
| E* | - | - | - | - | - | - | - | - | - | 16 | 16 |
| | | | | | | | | | | | |
| Vicat B °C] | 104 | 105 | 104 | 104 | 103 | 104 | 103 | 114 | 115 | 116 | 116 |
| | | | | | | | | | | | |
| MVI [ml/10'] | 19,6 | 23,6 | 22,4 | 34,4 | 28,6 | 31,2 | 26,7 | 26,1 | 32,1 | 31,3 | 72,2 |
| | | | | | | | | | | | |
| Ak, RT [kJ/m²] | 59,5 | 16,7 | 15,6 | 42,1 | 34,2 | 21,3 | 45,1 | 61,2 | 46,2 | 60,1 | 68,2 |
| | | | | | | | | | | | |
| Farbe | 2 | 1 | 1 | 1 | 1 | 1 | 1 | 1-2 | 1 | 1 | 1 |
| W_{t-30°C} [Nm] | | | | | | | | | | | |
| | | | | | | | | | | | |
| 250°C | 49,8 | 11,2 | 21,2 | 16,5 | 56,3 | 46,4 | 54,1 | 62,1 | 64,2 | 69,1 | 67,2 |
| 270°C | 43,7 | 10,6 | 20,4 | 15,4 | 57,1 | 45,1 | 51,1 | 43,2 | 59,5 | 70,5 | 68,4 |
| 290°C | 13,8 | 11,3 | 18,9 | 15,1 | 54,5 | 46,4 | 53,2 | 27,1 | 56,4 | 67,8 | 66,2 |
| | | | | | | | | | | | |
| Tiger-Lines | 3,5 | 3 | 3 | 3 | 2 | 2 | 2 | 2,5 | 1,5 | 1,5 | 1,5 |

Die erfindungsgemäßen Formmassen weisen verbesserte Witterungsbeständigkeit und Oberflächenqualität auf. Gegenüber dem Stand der Technik lassen sich Produkte mit deutlich verbesserter Schädigungsarbeit bei -30°C erhalten. Überraschenderweise weisen die erfindungsgemäßen Produkte auch geringere Abhängigkeit der Schädigungsarbeit von der Massetemperatur auf.

## Patentansprüche

1. Thermoplastische Formmasse, enthaltend,
a) 3 bis 78 Gew.-% eines oder mehrerer Styrolcopolymere, die keine von Maleinsäureanhydrid abgeleiteten Einheiten aufweisen, als Komponente A,
b) 15 bis 90 Gew.-% eines oder mehrerer Polyamide als Komponente B,
c) 5 bis 50 Gew.-% eines oder mehrerer schlagzäh-modifizierender Pfropf-Kautschuke ohne olefinische Doppelbindungen in der Kautschukphase als Komponente C,
d) 1 bis 25 Gew.-% eines oder mehrerer Styrolcopolymere, die, bezogen auf die gesamte Komponente D, 0,5 bis 5 Gew.-% von Maleinsäureanhydrid abgeleitete Einheiten aufweisen, als Komponente D,
e) 1 bis 30 Gew.-% eines oder mehrerer weiterer Kautschuke auf Basis olefinischer Monomere ohne Kern-Schale-Aufbau und mit mindestens 0,1 Gew.-% funktioneller Monomere als Komponente E,
f) 0 bis 50 Gew.-% eines oder mehrerer faser- oder teilchenförmiger Füllstoffe als Komponente F,
g) 0 bis 40 Gew.-% weiterer Zusatzstoffe als Komponente G,
wobei die Gesamtmenge der Komponenten A bis E und gegebenenfalls F und G 100 Gew.-% ergibt.

2. Formmasse nach Anspruch 1, **dadurch gekennzeichnet, dass** Komponente D 1,0 bis 2,5 Gew.-% von Maleinsäureanhydrid abgeleitete Einheiten aufweist.

3. Formmasse nach Anspruch 2, **dadurch gekennzeichnet, dass** Komponente D 1,7 bis 2,3 Gew.-% von Maleinsäureanhydrid abgeleitete Einheiten aufweist.

4. Formmasse nach einem der Ansprüche 1 bis 3, **dadurch gekennzeichnet, dass** die Formmasse weniger als 0,1 Gew.-% Phthalsäureanhydrid enthält.

5. Formmasse nach einem der Ansprüche 1 bis 4, **dadurch gekennzeichnet, dass** Komponente B 0,05 bis 0,5 Gew.-% Triacetondiamin (TAD)-Endgruppen aufweist.

6. Formmasse nach einem der Ansprüche 1 bis 5, **dadurch gekennzeichnet, dass** Komponente D ein Styrol-Acrylnitril-Maleinsäureanhydrid (MSA)-Terpolymer oder Styrol-N-Phenylmaleinimid-Maleinsäureanyhdrid-Terpolymer ist.

7. Formmasse nach einem der Ansprüche 1 bis 6, **dadurch gekennzeichnet, dass** Komponente A ein Styrol-Acrylnitril-Copolymer ist.

8. Formmasse nach einem der Ansprüche 1 bis 7, **dadurch gekennzeichnet, dass** Komponente C ein Acrylat-Styrol-Acrylnitril (ASA)-Pfropfkautschuk ist.

9. Formmasse nach einem der Ansprüche 1 bis 8, **dadurch gekennzeichnet, dass** Komponente E ein Copolymerisat ist aus
e1) 35 bis 89,95 Gew.-% Ethylen als Komponente E1,
e2) 10 bis 60 Gew.-% 1-Octen, 1-Buten, Propen oder Mischungen davon als Komponente E2 und
e3) 0,05 bis 5 Gew.-% funktioneller Monomere, wobei die Monomere funktionelle Gruppen tragen, ausgewählt aus Carbonsäure-, Carbonsäureanhydrid, Carbonsäureester-, Carbonsäureamid-, Carbonsäureimid-, Amino-, Hydroxyl-, Epoxid-, Urethan- oder Oxazolingruppen oder Mischungen davon.

10. Verfahren zur Herstellung von thermoplastischen Formmassen nach einem der Ansprüche 1 bis 7, **dadurch gekennzeichnet, dass** man die Komponenten A bis E und gegebenenfalls F und G in beliebiger Reihenfolge miteinander vermischt.

11. Verfahren nach Anspruch 10, **dadurch gekennzeichnet, dass** zunächst die Komponente E mit mindestens einem Teil der Komponente B zu einem Masterbatch vorgemischt wird, der nachfolgend mit den weiteren Komponenten der thermoplastischen Formmasse vermischt wird.

12. Verwendung von thermoplastischen Formmassen nach einem der Ansprüche 1 bis 9 zur Herstellung von Formkörpern, Folien oder Fasern.

13. Verwendung nach Anspruch 12, **dadurch gekennzeichnet, dass** die Formkörper KFZ-Bauteile oder Teile von Elektronikgeräten sind.

14. Verwendung nach Anspruch 13, **dadurch gekennzeichnet, dass** die KFZ-Bauteile im Betrieb einer Bewitterung ausgesetzt sind.

15. Formkörper, Fasern oder Folien aus einer thermoplastischen Formmasse nach einem der Ansprüche 1 bis 9.

## Claims

1. A thermoplastic molding composition, comprising
a) as component A, from 3 to 78% by weight of one or more styrene copolymers which have no units derived from maleic anhydride,
b) as component B, from 15 to 90% by weight of one or more polyamides,
c) as component C, from 5 to 50% by weight of one or more impact-modifying graft rubbers without olefinic double bonds in the rubber phase,
d) as component D, from 1 to 25% by weight of one or more styrene copolymers which have, based on the entire component D, from 0.5 to 5% by weight of units derived from maleic anhydride,
e) as component E, from 1 to 30% by weight of one or more further rubbers based on olefinic monomers without core-shell structure, and having at least 0.1% by weight of functional monomers,
f) as component F, from 0 to 50% by weight of one or more fibrous or particulate fillers,
g) as component G, from 0 to 40% by weight of further additives,
where the entire amount of components A to E and, if appropriate, F and G is 100% by weight.

2. The molding composition according to claim 1, wherein component D has from 1.0 to 2.5% by weight of units derived from maleic anhydride.

3. The molding composition according to claim 2, wherein component D has from 1.7 to 2.3% by weight of units derived from maleic anhydride.

4. The molding composition according to any of claims 1 to 3, wherein the molding composition comprises less than 0.1% by weight of phthalic anhydride.

5. The molding composition according to any of claims 1 to 4, wherein component B has from 0.05 to 0.5% by weight of triacetonediamine (TAD) end groups.

6. The molding composition according to any of claims 1 to 5, wherein component D is a styrene-acrylonitrile-maleic anhydride (MSA) terpolymer or styrene-N-phenylmaleinimide-maleic anhydride terpolymer.

7. The molding composition according to any of claims 1 to 6, wherein component A is a styrene-acrylonitrile copolymer.

8. The molding composition according to any of claims 1 to 7, wherein component C is an acrylate-styrene-acrylonitrile (ASA) graft rubber.

9. The molding composition according to any of claims 1 to 8, wherein component E is a copolymer composed of
e1) from 35 to 89.95% by weight of ethylene, as component E1,
e2) from 10 to 60% by weight of 1-octene, 1-butene, propene, or a mixture thereof, as component E2, and
e3) from 0.05 to 5% by weight of functional monomers, where the monomers bear functional groups selected from carboxylic acid groups, carboxylic anhydride groups, carboxylic ester groups, carboxamide groups, carboximide groups, amino groups, hydroxy groups, epoxide groups, urethane groups, or oxazoline groups, or a mixture thereof.

10. A process for the production of thermoplastic molding compositions according to any of claims 1 to 7, which comprises mixing components A to E and optionally F and G in any desired sequence with one another.

11. The process according to claim 10, wherein component E is first premixed with at least one portion of component B to give a masterbatch, which is then mixed with the further components of the thermoplastic molding composition.

12. The use of thermoplastic molding compositions according to any of claims 1 to 9 for the production of moldings, foils, or fibers.

13. The use according to claim 12, wherein the moldings are motor-vehicle components or parts of electronic equipment.

14. The use according to claim 13, wherein the motor-vehicle components have exposure to weathering during operation.

15. A molding, fiber, or foil composed of a thermoplastic molding composition according to any of claims 1 to 9.

## Revendications

1. Composition de moulage thermoplastique comprenant,
a) en tant que composant A: de 3 à 78 % en poids d'un ou plusieurs copolymères de styrène, qui ne comprennent pas d'unités dérivées de l'anhydride d'acide maléique,
b) en tant que composant B: de 15 à 90 % en poids d'un ou plusieurs polyamides,
c) en tant que composant C: de 5 à 50 % en poids d'un ou plusieurs caoutchoucs greffés modifiés pour résister aux chocs, sans doubles liaisons oléfiniques dans la phase caoutchouc,
d) en tant que composant D: de 1 à 25 % en poids d'un ou plusieurs copolymères de styrène qui, rapporté à la totalité du composant D, présentent de 0,5 à 5 % en poids d'unités dérivées de l'anhydride d'acide maléique,
e) en tant que composant E: de 1 à 30 % en poids d'un ou plusieurs autres caoutchoucs à base de monomères oléfiniques sans structure à coeur et à coque et contenant au moins 0,1 % en poids de monomères fonctionnels,
f) en tant que composant F: de 0 à 50 % en poids d'une ou plusieurs charges fibreuses ou particulaires,
g) en tant que composant G: de 0 à 40 % en poids d'autres additifs,
la quantité totale des composants A à E et le cas échéant F et G étant égale à 100 % en poids.

2. Composition de moulage selon la revendication 1, **caractérisée en ce que** le composant D contient de 1,0 à 2,5% en poids d'unités dérivant d'anhydride de l'acide maléique.

3. Composition de moulage selon la revendication 2, **caractérisée en ce que** le composant D contient de 1,7 à 2,3% en poids d'unités dérivant d'anhydride de l'acide maléique.

4. Composition de moulage l'une quelconque des revendications 1 à 3, **caractérisée en ce qu'**elle contient moins de 0,1% en poids d'unités dérivant d'anhydride de l'acide maléique.

5. Composition de moulage selon l'une quelconque des revendications 1 à 4, **caractérisé en ce que** le composant B comporte de 0,05 à 0,5% en poids de groupes terminaux triacétonediamine (TAD).

6. Composition de moulage selon l'une quelconque des revendications 1 à 5, **caractérisée en ce que** le composant D est un terpolymère styrène-acrylonitrile-anhydride de l'acide maléique (MSA) ou un terpolymère styrène-N-phénylmaleinimide-anhydride de l'acide maléique.

7. Composition de moulage selon l'une quelconque des revendications 1 à 6, **caractérisée en ce que** le composant A est un copolymère styrène-acrylonitrile.

8. Composition de moulage selon l'une quelconque des revendications 1 à 7, **caractérisée en ce que** le composant C est un caoutchouc greffé acrylate-styrène-acrylonitrile (ASA).

9. Composition de moulage selon l'une quelconque des revendications 1 à 8, **caractérisée en ce que** le composant E est un copolymère contenant:
e1) en tant que composant E1: 35 à 89,95% en poids d'éthylène,
e2) en tant que composant E2: 10 à 60% en poids de 1-octène, le 1-butène, propène ou leurs mélanges et
e3) 0,05 à 5% en poids de monomères fonctionnels, lesdits monomères portant des groupes fonctionnels choisis parmi les groupes acide carboxylique, anhydride carboxylique, ester carboxylique, carboxamide, imide carboxylique, amino, hydroxyle, époxy, uréthane ou oxazoline, ou des mélanges de ceux-ci.

10. Procédé de préparation de compositions de moulage thermoplastiques selon l'une quelconque des revendications 1 à 7, **caractérisé en ce que** les composants A à E et le cas échéant F et G, sont mélangés entre eux dans un ordre quelconque.

11. Procédé selon la revendication 10, **caractérisé en ce que** tout d'abord le premier composant E est prémélangé avec au moins une partie du composant B pour former un mélange maître qui est ensuite mélangé avec les autres composants de la composition de moulage thermoplastique.

12. Application de masses de moulage thermoplastiques selon l'une quelconque des revendications 1 à 9, pour la fabrication de pièces moulées, de films ou de fibres.

13. Application selon la revendication 12, **caractérisée en ce que** les pièces moulées sont des pièces automobiles ou des parties d'appareillages électroniques.

14. Application selon la revendication 13, **caractérisée en ce que** les pièces automobiles sont exposées pendant le fonctionnement à une altération.

15. Pièces moulées, fibres ou films d'une composition à mouler thermoplastique selon l'une quelconque des revendications 1 à 9.
